# EUROPÄISCHE PATENTSCHRIFT

(11) **EP 1 597 291 B1**
(45) Veröffentlichungstag und Bekanntmachung des Hinweises auf die Patenterteilung: **04.10.2006**
(21) Anmeldenummer: 04705764.1
(22) Anmeldetag: 28.01.2004
(51) Int. Cl.: C08F 12/08

(54) **VERFAHREN ZUR ANIONISCHEN POLYMERISATION VON ALPHA-METHYLSTYROL**
METHOD FOR ANIONIC POLYMERISATION OF ALPHA-METHYLSTYRENE
PROCEDE DE POLYMERISATION ANIONIQUE D'ALPHA-METHYLSTYROL

(30) Priorität: 19.02.2003 DE 10307058
(43) Veröffentlichungstag der Anmeldung: 23.11.2005
(73) Patentinhaber: BASF Aktiengesellschaft, 67056 Ludwigshafen (DE)
(72) Erfinder: DESBOIS, Philippe, 67487 Maikammer (DE); ISHAQUE, Michael, 68165 Mannheim (DE); SCHADE, Christian, 67063 Ludwigshafen (DE); DEFFIEUX, Alain, F-33000 Bordeaux (FR); CARLOTTI, Stéphane, F-33400 Talence (FR)
(86) Internationale Anmeldenummer: PCT/EP2004/000704
(87) Internationale Veröffentlichungsnummer: WO 2004/074332

(56) Entgegenhaltungen:
- WO-A-98/07765

## Beschreibung

Die Erfindung betrifft ein Verfahren zur Herstellung von Homopolymeren aus α-Methylstyrol, oder von Copolymeren aus α-Methylstyrol und Comonomeren, durch anionische Polymerisation in Gegenwart einer Initiatorzusammensetzung, dadurch gekennzeichnet, dass die Initiatorzusammensetzung Kaliumhydrid und mindestens ein Aluminiumorganyl enthält.

Poly-α-methylstyrol und Copolymere des α-Methylstyrols zeichnen sich insbesondere durch bessere thermische Eigenschaften, z.B. eine erhöhte Wärmestandfestigkeit, insbesondere eine bessere Wärmeformbeständigkeit aus, verglichen mit Polystyrol bzw. Copolymeren des Styrols. Ersetzt man bei der Herstellung von Styrolhomo- oder Copolymeren das Styrol ganz oder teilweise durch α-Methylstyrol, so erhält man Polymere bzw. daraus hergestellte Formteile, deren maximale Gebrauchstemperatur deutlich höher ist, wodurch anspruchsvolle Anwendungen ermöglicht werden.

Die Herstellung von Homo- und -copolymeren des α-Methylstyrols kann auf ähnlichem Wege erfolgen wie die Herstellung der entsprechenden Homo- bzw. Copolymeren des Styrols. Zur Herstellung von Standard-Polystyrol (GPPS, general purpose polystyrene) und von schlagzähem Polystyrol (HIPS, high impact polystyrene) sind verschiedene kontinuierliche oder diskontinuierliche, radikalische oder anionische, in Lösung oder in Suspension ablaufende Polymerisationsverfahren bekannt, siehe z.B. Ullmanns Enzyklopädie der Technischen Chemie, Vol. A21, VCH Verlag Weinheim 1992, S. 615-625. Bei den HIPS-Verfahren wird ein Kautschuk (z.B. Polybutadien oder Styrol-Butadien-Blockcopolymere) beispielsweise anionisch oder radikalisch hergestellt und in monomerem Styrol gelöst. Das Styrol wird danach z.B. radikalisch oder anionisch polymerisiert. Im Verlauf der Polystyrolbildung tritt Phaseninversion ein: im Endprodukt ist die Kautschukphase in einer Polystyrolmatrix dispergiert.

Die durch anionische Polymerisation erhaltenen Standard- oder schlagzähen Polystyrole weisen gegenüber den auf radikalischem Wege erhaltene Produkten einige Vorteile auf, u.a. geringere Restmonomeren- und Oligomerengehalte. Bei der radikalischen Polymerisation verläuft die Reaktion über freie Radikale und es werden z.B. peroxidische Initiatoren verwendet, wogegen die anionische Polymerisation über sche Initiatoren verwendet, wogegen die anionische Polymerisation über "lebende" Carbanionen ablauft und beispielsweise Alkalimetall-organylverbindungen als Initiatoren verwendet werden.

Die anionische Polymerisation verläuft wesentlich schneller und führt zu höheren Umsätzen, als die radikalische Polymerisation. Die Temperaturkontrolle der exothermen Reaktion ist aufgrund der hohen Geschwindigkeit schwierig. Dem kann man durch Verwendung von sogenannten Retardern (etwa Al-, Zn- oder Mg-Organylverbindungen) begegnen, welche die Reaktionsgeschwindigkeit senken. Die Viskosität der Reaktionsmischung nimmt bei der anionischen Kautschukherstellung in der Regel so schnell zu, dass eine Verdünnung mit einem inerten Lösungsmittel erforderlich ist.

In der DE-A 198 06 772 werden Initiatorzusammensetzungen aus einem Alkalimetallorganyl (d.h. Alkalimetallalkyl, -aryl oder-aralkyl) wie z.B. sec.-Butyllithium, und einem Aluminiumorganyl wie z.B. Triisobutylaluminium (TIBA) offenbart, sowie deren Verwendung zur Polymerisation von Vinylaromaten und Dienen.

Die US-PS 3 716 495 lehrt Initiatorzusammensetzungen aus a) Organolithiumverbindungen RLiₓ mit R = C₁₋₂₀-Alkyl, -Aryl, -Cycloalkyl, -Alkaryl oder -Aralkyl wie etwa n- oder sec-Butyllithium, b) Metallorganylen RₙM mit R wie vorstehend definiert und M = Metall aus den Gruppen 2a (Erdalkalimetalle), 2b (Zinkgruppe) und 3a (Borgruppe), wie z.B. Diethylzink oder Aluminiumorganyle, und c) polaren Verbindungen wie Tetrahydrofuran (THF). Sie werden zur Polymerisation von Dienen und Vinylaromaten verwendet.

Nachteilig an der Verwendung von Initiatoren, die Organolithiumverbindungen (Lithiumorganyle) wie n-, sec-oder tert-Butyllithium enthalten, ist der hohe Preis der Lithiumorganyle, der das Polymer-Endprodukt verteuert.

Im Unterschied zu den beiden vorstehend offenbarten Initiatorzusammensetzungen enthalten die erfindungsgemäßen Initiatoren Kaliumhydrid, also ein Alkalimetallhydrid ohne Organylreste.

Die WO-A 98/07765 offenbart Initiatoren für die anionische Polymerisation, enthaltend die Metallorganyle
- R¹M¹ mit: M¹ = Li, Na, K
R¹ = Wasserstoff, C₁₋₁₀-Alkyl, C₆₋₂₀-Aryl, C₇₋₂₀-alkylsubstituiertes Aryl,
und
- R²ₙM² mit: M² = n-wertiges Element der Gruppen 2a, 2b, oder 3a des Periodensystems,
R² = Wasserstoff, Halogen, C₁₋₂₀-Alkyl, C₆₋₂₀-Aryl.

Außerdem wird in der WO-Schrift ein entsprechendes Polymerisationsverfahren für Styrol- oder Dienmonomere offenbart.

Die vorliegende Erfindung stellt eine Auswahlerfindung gegenüber der WO-A 98/07765 dar, indem für R¹ allein Wasserstoff, für M¹ allein Kalium und für M² allein Aluminium ausgewählt wurde.

Die ältere, nicht vorveröffentlichte Anmeldung DE-Aktenzeichen 102 18 161.6 (Anmeldetag 23.04.02) beschreibt ein Verfahren zur anionischen Homo- und Copolymerisation von Styrolmonomeren oder Dienmonomeren oder deren Mischungen in Gegenwart einer Initiatorzusammensetzung, wobei die Initiatorzusammensetzung mindestens ein Alkalimetallhydrid ausgewählt aus LiH, NaH und KH, und mindestens ein Aluminiumorganyl, enthält. In der Anmeldung wird α-Methylstyrol als Styrolmonomeres nicht erwähnt, und in den insgesamt 26 Beispielen wird weder α-Methylstyrol als Monomeres nach Kaliumhydrid als Bestandteil der Initiatorzusammensetzung, verwendet.

Die Wirtschaftlichkeit der Verfahren des Standes der Technik ist nicht in allen Fällen optimal.

Es bestand die Aufgabe, den geschilderten Nachteilen abzuhelfen. Insbesondere bestand die Aufgabe, ein alternatives anionisches Polymerisationsverfahren für α-Methylstyrol-Homo- und -copolymere bereitzustellen. Das Verfahren sollte eine bessere Wirtschaftlichkeit aufweisen als die bisher bekannten Verfahren.

Demgemäß wurde das eingangs genannte Verfahren gefunden, sowie die dort hergestellten Homo- und Copolymere, deren Verwendung, sowie die Formkörper, Folien, Fasern und Schäume. Bevorzugte Ausführungsformen der Erfindung sind den Unteransprüchen zu entnehmen.

Bei den erfindungsgemäßen Verfahren werden Homopolymere aus α-Methylstyrol, oder Copolymere von α-Methylstyrol und Comonomeren, durch anionische Polymerisation in Gegenwart einer Initiatorzusammensetzung hergestellt. Die Initiatorzusammensetzung enthält als Alkalimetallhydrid Kaliumhydrid KH, sowie mindestens ein Aluminiumorganyl (Organoaluminiumverbindung).

Es besteht die Vorstellung, daß das Kaliumhydrid als Initiator der anionischen Polymerisation wirkt, sofern es im Lösungsmittel (üblicherweise unpolare, inerte Kohlenwasserstoffe) gelöst vorliegt. Das Aluminiumorganyl verbessert die Löslichkeit des Kaliumhydrids im Lösungsmittel, vermutlich durch Komplexbildung, und verbessert so die Wirksamkeit des Kaliumhydrids. Außerdem verlangsamt das Al-organyl die Polymerisationsgeschwindigkeit der Monomeren (sog. Retarder-Wirkung).

Das Kaliumhydrid kann in an sich bekannter Weise aus Kaliummetall und Wasserstoffgas unter Druck und bei erhöhter Temperatur hergestellt werden. Es ist jedoch auch im Chemikalienhandel erhältlich, beispielsweise als reiner Feststoff oder suspendiert z.B. in einem inerten Kohlenwasserstoff.

Zusätzlich zu Kaliumhydrid können andere Alkalimetallhydride wie Natriumhydrid oder Lithiumhydrid mitverwendet werden. Jedoch verwendet man bevorzugt als Alkalimetallverbindung allein Kaliumhydrid.

Die benötigte Menge an Kaliumhydrid richtet sich u.a. nach dem gewünschten Molekulargewicht (Molmasse) des Polymeren, das hergestellt werden soll, nach Art und Menge der verwendeten Aluminiumorganyle, und nach der Polymerisationstemperatur. In der Regel verwendet man 0,0001 bis 10, bevorzugt 0,001 bis 5 und besonders bevorzugt 0,01 bis 1 Mol-% Kaliumhydrid, bezogen auf die Gesamtmenge der eingesetzten Monomeren.

Als Aluminiumorganyle können Monoorganyle RH₂Al, Diorganyle R₂HAI und - bevorzugt - Triorganyle R₃Al verwendet werden. Dabei können die Reste R gleich oder verschieden sein und unabhängig voneinander Wasserstoff, Halogen, C₁-C₂₀-Alkyl, C₆-C₂₀-Aryl oder C₇-C₂₀- alkylsubstituiertes Aryl bedeuten. Bevorzugte Aluminiumorganyle sind die Aluminiumtrialkyle wie Triethylaluminium, Tri-iso-butylaluminium, Tri-n-butylaluminium, Triisopropylaluminium, Tri-n-hexylaluminium. Besonders bevorzugt wird Triisobutylaluminium (TIBA) eingesetzt.

Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen oder die Alkoholat-, Thiolat-, Amid-, Imid-, oder Phosphide-Gruppen tragen. Beispiele sind Diethylaluminium-(N,N-dibutylamid), Diethylaluminium-ethoxid, Diisobutylaluminium-ethoxid, Diisobutyl-(2,6-di-tert.-butyl-4-methyl-phenoxy)-aluminium (CAS-Nr. 56252-56-3), Methylaluminoxan, isobutyliertes Methylaluminoxan, Isobutylaluminoxan, Tetraisobutyldialuminoxan oder Bis(diisobutyl)aluminiumoxid.

Die Aluminiumorganyle sind in an sich bekannter Weise erhältlich oder können als Handelsprodukte bezogen werden.

Die benötigte Menge an Aluminiumorganyl richtet sich u.a. nach der Menge an Kaliumhydrid, und nach der Polymerisationstemperatur. Üblicherweise verwendet man 0,0001 bis 10, bevorzugt 0,001 bis 5 und besondere 0,01 bis 1 Mol-% Aluminiumorganyl, bezogen auf die Gesamtmenge der eingesetzten Monomeren.

In der Initiatorzusammensetzung kann das molare Verhältnis von Kaliumhydrid (Initiator) zu Aluminiumorganyl (Retarder) in weiten Grenzen variieren. Es richtet sich z.B. nach der gewünschten Retardierungswirkung, der Polymerisationstemperatur, der Art und Menge (Konzentration) der eingesetzten Monomeren, und dem gewünschten Molekulargewicht des Polymeren. Zweckmäßigerweise drückt man das genannte molare Verhältnis als Molverhältnis von Aluminium zu Kalium, Al/K, aus. Es beträgt in einer bevorzugten Ausführungsform 0,2:1 bis 10:1, besonders bevorzugt 0,2:1 bis 5:1 und insbesondere 0,2:1 bis 2:1.

Zur Herstellung der Initiatorzusammensetzung vermischt man üblicherweise das Kaliumhydrid und das Aluminiumorganyl, bevorzugt unter Mitverwendung eines Lösungs- bzw. Suspendierungsmittels (je nach der Löslichkeit des Kaliumhydrids bzw. des Aluminiumorganyls, nachfolgend zusammenfassend als Lösungsmittel bezeichnet).

Als Lösungsmittel eignen sich insbesondere inerte Kohlenwasserstoffe, genauer aliphatische, cycloaliphatische oder aromatische Kohlenwasserstoffe, wie etwa Cyclohexan, Methylcyclohexan, Pentan, Hexan, Heptan, Isooctan, Benzol, Toluol, Xylol, Ethylbenzol, Dekalin oder Paraffinöl, oder deren Gemische. Toluol ist besonders bevorzugt.

In einer bevorzugten Ausführungsform setzt man das Kaliumhydrid als solches, d.h. als trockenen Feststoff ein. In einer anderen bevorzugten Ausführungsform setzt man das Aluminiumorganyl gelöst in einem inerten Kohlenwasserstoff, z.B. Toluol, ein.

Die Temperatur bei der Herstellung der Initiatorzusammensetzung hängt von der Konzentration, der Art der Metallverbindungen und dem Lösungsmittel ab. In der Regel ist der gesamte Temperaturbereich zwischen Gefrierpunkt und Siedepunkt der Mischung geeignet. Zweckmäßigerweise arbeitet man im Bereich von 0 bis 250°C, bevorzugt im Bereich von 20 bis 200°C, insbesondere bei 20 bis 120°C.

Die Reifung oder Alterung der frisch hergestellten Initiatorzusammensetzung ist vorteilhaft für den reproduzierbaren Einsatz in der anionischen Polymerisation. Versuche haben gezeigt, dass Initiatorkomponenten, die getrennt voneinander verwendet oder nur kurz vor der Polymerisationsinitiierung vermischt werden, schlecht reproduzierbare Polymerisationsbedingungen und Polymereigenschaften hervorrufen. Der beobachtete Alterungsprozess ist vermutlich auf eine Komplexbildung der Metallverbindungen zurückzuführen, die langsamer als der Mischungsvorgang abläuft.

Für die oben angegebenen Konzentrations- und Temperaturbereich reicht in der Regel eine Reifungszeit von etwa 2 Minuten aus. Bevorzugt lässt man die homogene Mischung mindestens 5 Minuten, insbesondere mindestens 20 Minuten reifen. Es ist in der Regel aber auch nicht abträglich, wenn man die homogene Mischung mehrere Stunden, z.B. 1 bis 480 Stunden reifen lässt.

Es ist auch möglich, dass man der Initiatorzusammensetzung zusätzlich Styrol oder α-Methylstyrol zugibt. In diesem Fall erhält man ein oligomeres Polystyrylanion, an dessen Kettenende die Metallorganyle komplexiert sind. Bevorzugt verwendet man Styrol oder α-Methylstyrol in Mengen im Bereich von 10 bis 1000 mol-%, bezogen auf Kaliumhydrid.

Die Mischung der Initiatorkomponenten kann in jedem Mischaggregat durchgeführt werden, vorzugsweise in solchen, die mit Inertgas beaufschlagt werden können. Beispielsweise eignen sich Rührreaktoren mit Ankerrührer, oder Schüttelbehälter. Für die kontinuierliche Herstellung eigen sich besonders beheizbare Rohre mit statischen Mischelementen. Der Mischvorgang ist für eine homogene Vermischung der Initiatorkomponenten notwendig. Während der Reifung kann aber muss nicht weitergemischt werden. Die Reifung kann auch in einem kontinuierlich durchströmten Rührkessel oder in einem Rohrabschnitt erfolgen, dessen Volumen zusammen mit der Durchströmgeschwindigkeit die Reifezeit festlegt.

Gegenstand der Erfindung ist demnach auch das genannte erfindungsgemäße Verfahren zur Herstellung von Homopolymeren aus α-Methylstyrol, oder von Copolymeren aus α-Methylstyrol und Comonomeren, dadurch gekennzeichnet, dass die Initiatorzusammensetzung hergestellt wird, indem man Kaliumhydrid und das in einem inerten Kohlenwasserstoff gelöste oder suspendierte Aluminiumorganyl vermischt und die Mischung bei einer Temperatur von 0 bis 250°C mindestens 2 Minuten lang reifen lässt.

Als Comonomere für das erfindungsgemäße Verfahren kommen prinzipiell alle Monomere in Betracht, die mit α-Methylstyrol copolymerisierbar sind. Bevorzugt verwendet man als Copolymere (von α-Methylstyrol verschiedene) Styrolmonomere, oder Dienmonomere, oder deren Mischungen.

Als Styrolmonomere sind alle vinylaromatischen Monomere geeignet, z.B. Styrol, p-Methylstyrol, p-tert-Butylstyrol, Ethylstyrol, Vinylstyrol, Vinylnaphthalin und 1,1-Diphenylethylen. Bevorzugt verwendet man Styrol.

Als Dienmonomere kommen z.B. 1,3-Butadien, 2,3-Dimethylbutadien, 1,3-Pentadien, 1,3-Hexadien, Isopren und Piperylen in Betracht. 1,3-Butadien und Isopren sind bevorzugt, insbesondere 1,3-Butadien (nachfolgend kurz Butadien).

Besonders bevorzugt verwendet man als Comonomere Styrol, Butadien, Isopren oder deren Mischungen.

Zweckmäßigerweise setzt man die Monomeren in der verfahrenstypisch erforderlichen Reinheit ein, d.h. man entfernt störende Begleitstoffe wie Restfeuchte, polare Stoffe, Sauerstoff unmittelbar vor der Polymerisation in an sich bekannter Weise.

Der Anteil der Comonomeren beträgt insgesamt (Summe aller Comonomere) üblicherweise 0,1 bis 99,9, bevorzugt 0,1 bis 99 und insbesondere 0,1 bis 90 Gew.-%, bezogen auf die Gesamtmenge der Monomere. Dies bedeutet, dass in den Comonomeren der α-Methylstyrol-Anteil 0,1 bis 99,9, bevorzugt 1 bis 99,9 und insbesondere 10 bis 99,9 Gew.-% beträgt.

Verwendet man Styrol als einziges Comonomer, so beträgt der Styrolanteil in der Regel 0,1 bis 99,9, bevorzugt 10 bis 99,9 und insbesondere 50 bis 99,9 Gew.-%. Bei Butadien oder Isopren als einzigem Comonomer beträgt der Butadienanteil bzw. Isoprenanteil üblicherweise 0,1 bis 99,9, bevorzugt 1 bis 99 und insbesondere 5 bis 70 Gew.-%.

Verwendet man Styrol und Butadien, oder Styrol und Isopren, als die beiden einzigen Comonomere, so beträgt der Styrolanteil in der Regel 0,1 bis 99,9, bevorzugt 10 bis 99,9 und insbesondere 50 bis 99,9 Gew.-%, und der Butadienanteil bzw. Isoprenanteil in der Regel 0,1 bis 99,9, bevorzugt 0,1 bis 90 und insbesondere 0,1 bis 50 Gew.-%. Alle vorgenannten Gewichtsanteile beziehen sich auf die Gesamtmonomerenmenge.

Zusätzlich kann man bei der Polymerisationsreaktion polare Verbindungen bzw. Lewis-Basen mitverwenden. Es sind grundsätzlich alle literaturbekannten Additive der anionischen Polymerisation geeignet. Sie enthalten im allgemeinen mindestens ein O-, N-, S- oder P-Atom, das über ein freies Elektronenpaar verfügt. Bevorzugt sind Ether und Amine, z.B. Tetrahydrofuran, Diethylether, Tetrahydropyran, Dioxan, Kronenether, Alkylenglykoldialkylether, z.B. Ethylenglykolmonoethylether, Ethylenglykoldimethylether, N,N,N',N'-Tetramethylethylendiamin, N,N,N',N",N"-Pentamethyldiethylentriamin, 1,2-Bis(piperidino)ethan, Pyridin, N,N,N',N',N",N"-Hexamethyltriethylentriamin und Phosphorsäurehexamethyltriamid.

Die polaren Verbindungen bzw. Lewis-Basen wirken als Aktivator und erhöhen in vielen Fällen den Umsatz der Polymerisationsreaktion bzw. steigern die Reaktionsgeschwindigkeit. Sie vermögen außerdem in Styrol-Butadien- bzw. Styrol-Isopren-Blockcopolymeren die Anteile der verschiedenen Vinylverknüpfungen im Butadien- bzw. Isopren-Block zu steuern, siehe weiter unten, und damit die Mikrostruktur des Kautschuks zu beeinflussen. Falls sie die Reaktionsgeschwindigkeit erhöhen, ist ihre Menge zweckmäßigerweise so zu bemessen, daß die Reaktionsgeschwindigkeit des gesamten Ansatzes kleiner ist als in einem Ansatz, der ohne Zusatz der retardierenden Komponenten durchgeführt wird. Dazu verwendet man weniger als 500 Mol-%, bevorzugt weniger als 200 Mol-% und insbesondere weniger als 100 Mol-% der polaren Verbindung bzw. Lewis-Base, bezogen auf die Initiatorzusammensetzung.

Das erfindungsgemäße Verfahren kann in Anwesenheit (Lösungspolymerisation) oder in Abwesenheit (Massepolymerisation) eines Lösungsmittels durchgeführt werden. Ohne Lösungsmittel arbeitet man in der Regel bei Temperaturen über 100°C, bei denen sich auch Schmelzen von Polymeren handhaben lassen.

Als Lösungsmittel eignen sich die für die anionische Polymerisation üblichen aliphatischen, cycloaliphatischen oder aromatischen Kohlenwasserstoffe mit 4 bis 12 Kohlenstoffatomen wie Pentan, Hexan, Heptan, Cyclohexan, Methylcyclohexan, Isooctan, Dekalin, Benzol, Alkylbenzole wie Toluol, Xylol, Ethylbenzol oder Cumol, oder geeignete Gemische. Das Lösungsmittel sollte die verfahrenstypisch erforderliche Reinheit aufweisen. Zur Abtrennung protonenaktiver Substanzen kann es beispielsweise über Aluminiumoxid oder Molekularsieb getrocknet und/oder vor Verwendung destilliert werden. Vorzugsweise wird das Lösungsmittel aus dem Verfahren nach Kondensation der Lösungsmittelgase und der genannten Reinigung wiederverwendet.

Bei der Lösungspolymerisation arbeitet man üblicherweise bei Temperaturen von 0 bis 250, bevorzugt 20 bis 200°C.

Durch die Auswahl von Zusammensetzung und Menge der Aluminiumorganyle ist es möglich, die Retardierungswirkung in weiten Temperaturbereichen einzustellen. So kann auch bei anfänglichen Monomerkonzentrationen im Bereich von 50 bis 100 Volumenprozent, insbesondere von 70 bis 100 Volumenprozent polymerisiert werden, die zu hochviskosen Polymerlösungen führen und zumindest bei höheren Umsätzen höhere Temperaturen verlangen.

Nach Beendigung der Polymerisation können die lebenden Polymerketten mit einem Kettenabbruchmittel verschlossen werden. Als Kettenabbruchmittel eignen sich protonenaktive Substanzen oder Lewis-Säuren wie beispielsweise Wasser, Alkohole wie Methanol oder isopropanol, aliphatische und aromatische Carbonsäuren wie 2-Ethylhexansäure sowie anorganische Säuren wie Kohlensäure oder Borsäure.

Das erfindungsgemäße Verfahren kann in jedem druck- und temperaturfesten Reaktor durchgeführt werden, wobei es grundsätzlich möglich ist, rückvermischende oder nicht rückvermischende Reaktoren (d.h. Reaktoren mit Rührkessel- oder Rohrreaktor-Verhalten) zu verwenden. Das Verfahren führt je nach Wahl der Initiatorkonzentration und -zusammensetzung, des speziell angewandten Verfahrensablaufs und anderer Parameter, wie Temperatur und evtl. Temperaturverlauf, zu Polymerisaten mit hohem oder niedrigem Molekulargewicht. Geeignet sind zum Beispiel Rührkessel, Turmreaktoren, Schlaufenreaktoren sowie Rohrreaktoren oder Rohrbündelreaktoren mit oder ohne Einbauten. Einbauten können statische oder bewegliche Einbauten sein.

Neben dem vorstehend beschriebenen Verfahren zur Polymerisation betrifft die Erfindung ebenso die nach dem Polymerisationsverfahren erhältlichen Polymere, also Homopolymere aus α-Methylstyrol, und Copolymere aus α-Methylstyrol und Comonomeren.

Solche Copolymere sind z.B. ausgewählt aus α-Methylstyrol-Styrol-Copolymer, schlagzähem Polystyrol enthaltend α-Methylstyroleinheiten, und Styrol-Butadien-Blockcopolymeren enthaltend α-Methylstyroleinheiten. α-Methylstyrol-Styrol-Copolymer wird auch als Poly-α-Methylstyrol-Styrol (PS/α-MeS) bezeichnet.

Bei schlagzähem Polystyrol enthaltend α-Methylstyroleinheiten handelt es sich um schlagzähes (d.h. kautschukhaltiges) Polystyrol, bei dem das Styrol ganz oder teilweise durch α-Methylstyrol ersetzt ist. Bei Styrol-Butadien-Blockcopolymeren enthaltend α-Methylstyroleinheiten handelt es sich um Styrol-Butadien-Blockcopolymere, bei denen in mindestens einem Styrolblock das Styrol ganz oder teilweise durch α-Methylstyrol ersetzt ist.

Bei den Blockcopolymeren wird nachfolgend ein Block aus Styrol, bzw. aus α-Methylstyrol, bzw. aus Styrol und α-Methylstyrol, zusammenfassend und vereinfachend als Styrolblock S bezeichnet.

Die erfindungsgemäß hergestellten α-Methylstyrol-haltigen Styrol-Butadien-Blockcopolymere können z.B. lineare Zweiblock-Copolymere S-B oder Dreiblock-Copolymere S-B-S bzw. B-S-B sein (S = Styrolblock, B = Butadienblock), wie man sie durch anionische

Polymerisation nach dem erfindungsgemäßen Verfahren erhält. Die Blockstruktur entsteht im wesentlichen dadurch, dass man zunächst Styrol und/oder α-Methylstyrol alleine anionisch polymerisiert, wodurch ein Styrolblock S entsteht. Nach Verbrauch der Styrolmonomere wechselt man das Monomere, indem man monomeres Butadien zufügt und anionisch zu einem Butadienblock B polymerisiert (sog. sequentielle Polymerisation). Das erhaltene Zweiblockpolymere S-B kann durch erneuten Monomerenwechsel auf Styrol und/oder α-Methylstyrol zu einem Dreiblockpolymeren S-B-S polymerisiert werden, falls gewünscht. Entsprechendes gilt sinngemäß für Dreiblockcopolymere B-S-B.

Bei den Dreiblockcopolymeren S-B-S können die beiden Styrolblöcke gleich groß (gleiches Molekulargewicht, also symmetrischer Aufbau S₁-B-S₁) oder verschieden groß (unterschiedliches Molekulargewicht also asymmetrischer Aufbau S₁-B-S₂) sein. Gleiches gilt sinngemäß für die beiden Butadienblöcke der Blockcopolymere B-S-B. Selbstverständlich sind auch Blockabfolgen S-S-B bzw. S₁-S₂-B, oder S-B-B bzw.
S-B₁-B₂, möglich. Vorstehend stehen die Indices für die Blockgrößen (Blocklängen bzw. Molekulargewichte). Die Blockgrößen hängen beispielsweise ab von den verwendeten Monomermengen und den Polymerisationsbedingungen.

Anstelle der kautschukelastischen "weichen" Butadienblöcke B oder zusätzlich zu den Blöcken B können auch Blöcke B/S stehen. Sie sind ebenfalls weich und enthalten Butadien, sowie Styrol und/oder α-Methylstyrol, wobei die Monomereinheiten in der Polymerkette beispielsweise statistisch verteilt oder als tapered-Struktur (tapered = Gradient von Butadien-reich nach Butadien-arm oder umgekehrt) vorliegen können. Falls das Blockcopolymere mehrere B/S-Blöcke enthält, können die Absolutmengen und die relativen Anteile, an Styrol und/oder α-Methylstyrol, sowie an Butadien, in den einzelnen B/S-Blöcken gleich oder verschieden sein, ergebend unterschiedliche Blöcke (B/S)₁, (B/S)₂, etc.

Als Styrol-Butadien-Blockcopolymere sind auch Vier- und Polyblockcopolymere geeignet.

Die genannten Blockcopolymere können eine (vorstehend beschriebene) lineare Struktur aufweisen. Jedoch sind auch verzweigte oder stemförmige Strukturen möglich und für manche Anwendungen bevorzugt. Verzweigte Blockcopolymere erhält man in bekannter Weise, z.B. durch Pfropfreaktionen von polymeren "Seitenästen" auf eine Polymer-Hauptkette.

Sternförmige Blockcopolymere sind z.B. durch Umsetzung der lebenden anionischen Kettenenden mit einem mindestens bifunktionellen Kopplungsmittel erhältlich. Solche Kopplungsmittel werden etwa in den US-PS 3 985 830, 3 280 084, 3 637 554 und 4 091 053 beschrieben. Bevorzugt sind epoxidierte Glyceride (z. B. epoxidiertes Leinsamenöl oder Sojaöl), Siliciumhalogenide wie SiCl₄, oder auch Divinylbenzol, außerdem polyfuktionelle Aldehyde, Ketone, Ester, Anhydride oder Epoxide. Speziell für die Dimerisierung eignen sich auch Dichlordialkylsilane, Dialdehyde wie Terephthalaldehyd und Ester wie Ethylformiat. Durch Kopplung gleicher oder verschiedener Polymerketten kann man symmetrische oder asymmetrische Sternstrukturen herstellen, d.h. die einzelnen Sternäste können gleich oder verschieden sein, insbesondere verschiedene Blöcke S, B, B/S bzw. unterschiedliche Blockabfolgen enthalten. Weitere Einzelheiten zu stemförmigen Blockcopolymeren sind beispielsweise der WO-A 00/58380 zu entnehmen.

Die vorstehend gebrauchten Monomerbezeichnungen Styrol bzw. Butadien stehen beispielhaft auch für andere Vinylaromaten bzw. Diene.

Erfindungsgemäß hergestellt sind die α-Methylstyrol-haltigen Styrol-Butadien-Blockcopolymere, solange mindestens ein Block nach dem erfindungsgemäßen Verfahren hergestellt wurde. D.h. es müssen nicht alle Blöcke nach dem erfindungsgemäßen Verfahren hergestellt werden. Beispielsweise kann man mindestens einen Block erfindungsgemäß mit einer Initiatorzusammensetzung enthaltend Kaliumhydrid und Aluminiumorganyl polymerisieren, und einen oder mehrere andere Blöcke desselben Blockcopolymers nach einem anderen, nicht erfindungsgemäßen Verfahren polymerisieren, etwa mit Organolithiumverbindungen oder Organomagnesiumverbindungen.

Das erfindungsgemäße α-Methylstyrol enthaltende schlagzähe Polystyrol (HIPS) enthält neben der Polystyrolmatrix, als Kautschukkomponente z. B. Polybutadien, Polyisopren, oder - bevorzugt - Styrol-Butadien-Blockcopolymere.

Dabei kann man die Kautschukkomponente nach dem erfindungsgemäßen Verfahren herstellen, oder auch nach Verfahren des Standes der Technik, z.B. durch anionische Polymerisation unter Verwendung von z.B. Organolithiumverbindungen, oder durch radikalische Polymerisation.

Bei durch anionische Polymerisation hergestellten Kautschuken liegt der Kautschuk in der Regel gelöst in einem Lösungsmittel oder monomerem Styrol vor. Beim erfindungsgemäßen Verfahren brauchen die Kautschuke nicht vom Lösungsmittel abgetrennt zu werden (obwohl auch dies möglich ist). Vielmehr kann man die Lösung des Kautschuks mitsamt Lösungsmittel direkt zum HIPS weiterverarbeiten.

Dazu wird zu der Kautschuklösung, die ggf. zuvor durch Zusatz von Kettenabbruchmittel ausreagieren gelassen wurde, monomeres Styrol und/oder α-Methylstyrol, und die Initiatorzusammensetzung aus KH und Al-organyl, gegeben, und die Mischung nach dem erfindungsgemäßen Verfahren anionisch polymerisiert, d.h. man polymerisiert Styrol und/oder α-Methylstyrol in Gegenwart des Kautschuks.

Erfindungsgemäß hergestelltes Polymer ist auch i) ein HIPS enthaltend erfindungsgemäß hergestellten Kautschuk, wobei die Polystyrolmatrix nach einem anderen als dem erfindungsgemäßen Verfahren in Gegenwart des Kautschuks polymerisiert wurde, und ii) ein HIPS enthaltend nicht erfindungsgemäß hergestellten Kautschuk, wobei die Polystyrolmatrix aus α-Methylstyrol und ggf. Comonomeren wie Styrol, nach dem erfindungsgemäßen Verfahren in Gegenwart des Kautschuks polymerisiert wurde.

Demnach umfasst dieses HIPS solche HIPS-Polymere, bei denen entweder die Kautschukkomponente oder die Polystyrolmatrix oder beide Bestandteile, α-Methylstyrol enthalten und nach dem erfindungsgemäßen Verfahren hergestellt wurden.

Besonders bevorzugt sind schlagzähe Polystyrolformmassen, enthaltend als Kautschuk
a) ein Styrol-Butadien-Zweiblockcopolymer S₁-B₁ mit einem Styrolanteil von 30 bis 70, bevorzugt 40 bis 60 Gew.-%, bezogen auf das Zweiblockcopolymer, oder
b) eine Mischung aus dem unter a) beschriebenen Zweiblockcopolymer mit einem zweiten Styrol-Butadien-Zweiblockcopolymer S₂-B₂ mit einem Styrolanteil von 10 bis 50, bevorzugt 20 bis 40 Gew.-%, bezogen auf das Zweiblockcopolymer, oder
c) eine Mischung aus dem unter a) beschriebenen Zweiblockcopolymer mit einem Styrol-Butadien-Styrol-Dreiblockcopolymer S-B-S mit einem Styrolanteil von 5 bis 75, bevorzugt 20 bis 50 Gew.-%,bezogen auf das Dreiblockcopolymer. Besonders bevorzugt verwendet man als Dreiblockcopolymer ein Polymer S₁-B-S₂, bei dem der Styrolblock S₁ ein gewichtmittleres Molekulargewicht Mw von 20.000 bis 200.000, bevorzugt 50.000 bis 120.000, der Butadienblock B ein Mw von 30.000 bis 300.000, bevorzugt 100.000 bis 200.000, und der Styrolblock S₂ ein Mw von 1.000 bis 100.000, bevorzugt 5.000 bis 30.000, aufweist.

Bei den Styrol-Butadien-Blockcopolymeren erlaubt das erfindungsgemäße Verfahren darüberhinaus eine Steuerung des Gehaltes an 1,2-Vinylverknüpfungen im Polybutadienblock bzw. Polyisoprenblock. Da die mechanischen Eigenschaften dieser Polymere auch vom 1,2-Vinylgehalt des Polybutadiens bzw. Polyisoprens bestimmt werden, ermöglicht das Verfahren demnach die Herstellung von. Styrol-Butadien-Blockcopolymeren mit maßgeschneiderten Eigenschaften.

Die erfindungsgemäß hergestellten Polymere zeichnen sich außerdem durch einen geringen Gehalt an Restmonomeren bzw. -oligomeren aus. Dieser Vorteil fällt insbesondere bei styrolhaltigen bzw. α-Methylstyrol-haltigen Polymeren ins Gewicht, weil der geringe Gehalt an Restmonomeren und Restoligomeren des Styrols bzw. α-Methylstyrols, eine nachträgliche Entgasung - z.B. auf einem Entgasungsextruder, verbunden mit höheren Kosten und nachteiliger thermischer Schädigung des Polymeren (Depolymerisation) - überflüssig macht.

Zur Erhöhung der Reißdehnung kann dem erfindungsgemäßen schlagzähen Polystyrol 0,1 bis 10 Gew.-%, bevorzugt 0,5 bis 5 Gew.-% Mineralöl (Weißöl) bezogen auf das schlagzähe Polystyrol, zugesetzt werden.

Die Polymere können übliche Zusatzstoffe und Verarbeitungshilfsmittel enthalten, z.B. Gleit- oder Entformungsmittel, Farbmittel wie z.B. Pigmente oder Farbstoffe, Flammschutzmittel, Antioxidantien, Stabilisatoren gegen Lichteinwirkung, faser- und pulverförmige Füll- oder Verstärkungsmittel oder Antistatika, sowie andere Zusatzstoffe, oder deren Mischungen.

Geeignete Gleit- und Entformungsmittel sind z.B. Stearinsäuren, Stearylalkohol, Stearinsäureester oder -amide, Metallstearate, Montanwachse und solche auf Basis von Polyethylen und Polypropylen.

Pigmente sind beispielsweise Titandioxid, Phthalocyanine, Ultramarinblau, Eisenoxide oder Ruß, sowie die Klasse der organischen Pigmente. Unter Farbstoffen sind alle Farbstoffe zu verstehen, die zur transparenten, halbtransparenten oder nichttransparenten Einfärbung von Polymeren verwendet werden können, insbesondere solche, die zur Einfärbung von Styrolhomo- und -copolymeren geeignet sind. Derartige Farbstoffe sind dem Fachmann bekannt.

Als Flammschutzmittel können z.B. die dem Fachmann bekannten halogenhaltigen oder phosphorhaltigen Verbindungen, Magnesiumhydroxid, sowie andere gebräuchliche Verbindungen, oder deren Mischungen verwendet werden.

Geeignete Antioxidantien (Wärmestabilisatoren) sind etwa sterisch gehinderte Phenole, Hydrochinone, verschiedene substituierte Vertreter dieser Gruppe, sowie deren Mischungen. Sie sind etwa als Topanol® oder Irganox® im Handel erhältlich.

Geeignete Stabilisatoren gegen Lichteinwirkung sind z.B. verschiedene substituierte Resorcine, Salicylate, Benzotriazole, Benzophenone, HALS (Hindered Amine Light Stabilizers), wie sie z.B. als Tinuvin® kommerziell erhältlich sind.

Als Beispiele für faserförmige bzw. pulverförmige Füllstoffe seien Kohlenstoff- oder Glasfasern in Form von Glasgeweben, Glasmatten oder Glasseidenrovings, Schnittglas, Glaskugeln sowie Wollastonit genannt, besonders bevorzugt Glasfasern. Bei der Verwendung von Glasfasern können diese zur besseren Verträglichkeit mit den Blendkomponenten mit einer Schlichte und einem Haftvermittler ausgerüstet sein. Die Einarbeitung der Glasfasern kann sowohl in Form von Kurzglasfasern als auch in Form von Endlossträngen (Rovings) erfolgen.

Als teilchenförmige Füllstoffe eignen sich Ruß, amorphe Kieselsäure, Magnesiumcarbonat (Kreide), gepulverter Quarz, Glimmer, Mica, Bentonite, Talkum, Feldspat oder insbesondere Calciumsilikate wie Wollastonit und Kaolin.

Geeignete Antistatika sind beispielsweise Aminderivate wie N,N-bis(hydroxyalkyl)-alkylamine oder -alkylenamine, Polyethylenglycolester oder Glycerinmono- und - distearate, sowie deren Mischungen.

Die einzelnen Zusatzstoffe werden in den jeweils üblichen Mengen verwendet, sodass sich nähere Angaben hierzu erübrigen.

Die Herstellung der Formmassen aus erfindungsgemäß hergestellten Polymeren kann nach an sich bekannten Mischverfahren erfolgen, beispielsweise unter Aufschmelzen in einem Extruder, Banbury-Mischer, Kneter, Walzenstuhl oder Kalander. Die Komponenten können jedoch auch "kalt" verwendet werden und das pulvrige oder aus Granulaten bestehende Gemisch wird erst bei der Verarbeitung aufgeschmolzen und homogenisiert.

Bevorzugt werden die Komponenten, gegebenenfalls mit den erwähnten Zusatzstoffen, in einem Extruder oder einer anderen Mischvorrichtung bei Temperaturen von 100 bis 320°C unter Aufschmelzen vermischt, und ausgetragen. Die Verwendung eines Extruders ist besonders bevorzugt.

Aus den Formmassen lassen sich Formkörper (auch Halbzeuge, Folien, Filme und Schäume) aller Art herstellen. Gegenstand der Erfindung sind demnach auch die Ver-wendung der erfindungsgemäß hergestellten Polymere zur Herstellung von Formkörpern, Folien, Fasern und Schäumen, sowie die aus den Polymeren erhältlichen Formkörper, Folien, Fasern und Schäume.

Mit dem erfindungsgemäßen Verfahren lassen sich Homo- und Copolymere des α-Methylstyrols mit verbesserter Wirtschaftlichkeit herstellen. Die erfindungsgemäßen Polymere zeichnen sich durch ein ausgewogenes Eigenschaftsprofil aus, insbesondere durch geringe Gehalte an Restmonomeren und Restoligomeren von Styrol und α-Methylstyrol, sowie durch gute Wärmeformbeständigkeiten.

### Beispiele:

Alle Umsetzungen wurden unter Feuchtigkeitsausschluss unter Stickstoffatmosphäre in einer Glovebox durchgeführt. Es wurden folgende Verbindungen verwendet, wobei gereinigt bedeutet, dass mit Aluminiumoxan gereinigt und getrocknet wurde.
- Styrol, gereinigt von BASF
- α-Methylstyrol. gereinigt von BASF
- Butadien, gereinigt von BASF
- Kaliumhydrid, als Feststoff von Fa. Aldrich
- Triisobutylaluminium (TIBA) als 1,0 molare Lösung in Toluol, fertige Lösung von Fa. Aldrich
- (n-Butyl)(sec-butyl)magnesium (kurz: Dibutylmagnesium, DBM) als 2,0 molare Lösung in Heptan
- sec-Butyllithium (s-BuLi) als 12 gew.-%ige Lösung in Cyclohexan, fertige Lösung von Fa. Chemmetall
- Natriumhydrid, als Feststoff von Fa. Aldrich
- Cyclohexan, gereinigt, von BASF
- Toluol, gereinigt, von BASF
- Methanol, von BASF
- n-Octadecyl-[3-(3,5-di-tert-butyl-4-hydroxyphenyl)]propionat; es wurde Irganox® 1076 von Fa. Ciba Specialty Chemicals verwendet
- Weißöl; es wurde das Mineralöl Winog® 70 von Fa. Wintershall verwendet
- 2-Ethylhexansäure.

### 1. Herstellung der Initiatorzusammensetzungen

### 1.1 Initiatorzusammensetzungen In1 bis In3: KH + TIBA (erfindungsgemäß)

Es wurden bei 50°C 4 g festes Kaliumhydrid vorgelegt und unter Rühren zugefügt
für Initiatorzus. In1: 10 ml Toluol und 90 ml der 1,0 molaren TIBA-Lösung, bzw.
für Initiatorzus. In2: 30 ml Toluol und 70 ml der 1,0 molaren TIBA-Lösung, bzw
für Initiatorzus. In3: 60 ml Toluol und 40 ml der 1,0 molaren TIBA-Lösung.
Anschließend wurde die Mischung unter Rühren bei 50°C 5 Stunden lang reifen gelassen. Das molare Verhältnis Al/K betrug
bei In1: 0,9:1
bei In2: 0,7:1
bei In3: 0,4:1.

### 1.2 Initiatorzusammensetzungen ln4V bis ln8V (zum Vergleich)

a) In4V und ln5V: s-BuLi + Dibutylmagnesium (DBM)
   Es wurden bei 23°C unter Rühren
   für In4V: 13 ml Toluol und 23 ml der 12 gew.-%igen s-BuLi-Lösung mit 64 ml der 2,0 molaren DBM-Lösung, bzw.
   für In5V: 28 ml der 12 gew.-%igen s-BuLi-Lösung mit 72 ml der 2,0 molaren DBM-Lösung
   vermischt. Anschließend wurde die Mischung unter Rühren bei 23°C 60 min lang reifen gelassen. Das molare Verhältnis Mg/Li betrug in beiden Fällen In4V und In5V jeweils 4:1, und die Li-Konzentration betrug
   bei In4V: 0,32 mol/l, bzw.
   bei In5V: 0,39 mol/l.
b) In6V: s-BuLi allein: Es wurde allein die 12 gew.-%ige s-BuLi-Lösung verwendet.
c) In7V und In8V: s-BuLi + TIBA bzw. NaH + TIBA

Es wurden bei 25°C unter Rühren
für In7V: 39 ml Toluol und 71 ml der 12 gew.-%igen s-BuLi-Lösung mit 90 ml der 1,0 molaren TIBA-Lösung, bzw.
für In8V: 10 ml Toluol und 2,4 g festes Natriumhydrid mit 90 ml der 1,0 molaren TIBA-Lösung
vermischt. Anschließend wurde die Mischung unter Rühren bei 25°C 60 min lang reifen gelassen. Das molare Verhältnis
Al/Li betrug bei In7V: 0,9:1, bzw.
Al/Na betrug bei In8V: 0,9:1.

### 2. Herstellung und Eigenschaften von α-Methylstyrol-Copolymeren

Die nachfolgend angegebenen Molekulargewichte der Polymere (Gewichtsmittel M_{w} und Zahlenmittel Mₙ) wurden mittels Gelpermeationschromatographie (GPC) bestimmt. Die Einzelheiten waren wie folgt: Eluent Tetrahydrofuran; Flussrate 1,2 ml/min; RI- bzw. UV-Detektor; drei Styroldivinylbenzolgel-Trennsäulen (35°C, je 300 x 8 mm) PLgel Mixed B von Fa. Polymer Laboratories; Kalibration mit Polystyrolstandards bzw. Polybutadienstandards je nach erhaltenem Polymeren.

Aus M_{w} und Mₙ wurde die Uneinheitlichkeit M_{w}/Mₙ berechnet.

Der α-Methylstyrol-Anteil in den Copolymeren wurde durch Aufnahme und Auswertung von ¹H-Kernresonanzspektren (¹H-NMR, nuclear magnetic resonance) bestimmt.

Die Glasübergangstemperatur wurde durch Differential Scanning Calorymetry (DSC) bestimmt. Die Einzelheiten waren: Starttemperatur 23°C, Stoptemperatur 200°C, Heizrate 1°C/min, Bestimmung im zweiten Lauf.

Die Wärmeformbeständigkeit Vicat B wurde bestimmt als Vicat-Erweichungstemperatur VST, Verfahren B50 (Kraft 50 N, Heizrate 50°C/h) nach EN ISO 306, an nach EN ISO 3167 hergestellten Probekörpern.

Der Resimonomergehalt, also der Restgehalt des Polymeren an Styrol, Butadien, bzw. α-Methylstyrol, wurde gaschromatographisch bestimmt.

### 2.1 Beispiele 1 bis 8V: Herstellung eines α-Methylstyrol-Styrol-Copolymers

In der nachfolgenden allgemeinen Vorschrift stehen die Variablen (Großbuchstaben) für die variierten Parameter bzw. die erhaltenen Ergebnisse. Die Einzelwerte sind in Tabelle 1 angegeben.

Es wurden unter Rühren 30 ml einer Monomermischung aus 50 Vol.-% α-Methylstyrol und 50 Vol.-% Styrol, vorgelegt und auf 100°C erwärmt. Danach gab man die Initiatorzusammensetzung In hinzu und hielt bei 100°C, während die Abnahme der Monomerkonzentration gravimetrisch verfolgt wurde. 5 Stunden nach der Initiatorzugabe wurde die Reaktion durch Zugabe von 1 ml Methanol abgebrochen. Der Umsatz betrug zu diesem Zeitpunkt U %.

Aus der erhaltenen Reaktionsmischung wurde das Polymere durch Zugabe von Methanol ausgefällt, das ausgefallene Polymere abfiltriert und im Trockenschrank getrocknet. Am erhaltenen Pulver wurden bestimmt:
- die Molekulargewichte M_{w} und Mₙ sowie die Uneinheitlichkeit M_{w}/Mₙ mit GPC
- der α-Methylstyrol-Anteil Y mit ¹H-NMR
- die Glasübergangstemperatur Tg mit DSC.

**Tabelle 1: α-Methylstyrol-Styrol-Comolymer (nb: nicht bestimmt)**

| Beispiel | Initiatorzusammens. In | Umsatz U [%] | Molek.gewicht Mₙ [g/mol] | Uneinheitlichkeit M_{w}/Mₙ. | Anteil α-MeS Y[%] | Glasüberg.temp. Tg [°C] |
|---|---|---|---|---|---|---|
| 1 | 3 ml In1 | 80 | 8900 | 2,4 | 37 | 115 |
| 2 | 3 ml In2 | 78 | 17500 | 2,4 | 27 | 98/123¹⁾ |
| 3 | 3 ml In3 | 94 | 11700 | 2,1 | 46 | 128 |
| 4V | 10 ml In4V | 59 | 3700 | 1,5 | 16 | nb |
| 5V | 13 ml In5V | 77 | 2000 | 1,7 | 25 | nb |
| 6V | 2,2 ml In6V | 61 | 4600 | 1,3 | 16 | 105 |
| 7V | 3 ml In7V | 60 | 5350 | 1,7 | 16 | 109 |
| 8V | 3 ml In8V | 55 | 3700 | 1,5 | 7 | 102 |

| | | | | | | |
|---|---|---|---|---|---|---|
| ¹⁾ Das DSC-Diagramm zeigte zwei Glasübergangstemperaturen an | | | | | | |

Die Tabelle zeigt, dass sich mit dem erfindungsgemäßen Verfahren α-Methylstyrol-Styrol-Copolymere mit variablem Eigenschaftsprofil herstellen lassen.

In den nicht erfindungsgemäßen Vergleichsbeispielen wurden nicht erfindungsgemäße Initiatorzusammensetzungen aus Lithiumorganyl und Magnesiumorganyl (s-BuLi + DBM, Vergleichsbeispiele 4V und 5V), aus Lithiumorganyl alleine (s-BuLi, Vergleichsbeispiel 6V), aus Lithiumorganyl und Aluminiumorganyl (s-BuLi + TIBA, Vergleichsbeispiel 7V), oder aus Natriumhydrid und Aluminiumorganyl (NaH + TIBA, Vergleichsbeispiel 8V), verwendet. Die erhaltenen Polymere wiesen nur geringe Molekulargewichte Mₙ von 2000 bis ca. 5400 g/mol, geringe α-Methylstyrol-Anteile von 7 bis 25 %, und unzureichende Glasübergangstemperaturen von 102 bis 109°C auf.

Dagegen erhielt man erfindungsgemäß bei Verwendung einer Initiatorzusammensetzung aus Kaliumhydrid und Aluminiumorganyl (KH + TIBA, Beispiele 1 bis 3), Polymere mit erheblich höheren Molekulargewichten Mₙ von 8900 bis 17500 g/mol, höheren α-Methylstyrol-Anteilen von 27 bis 46 %, und höheren Glasübergangstemperaturen von 115 bis 128°C.

### 2.2 Beispiel 9: Herstellung eines Styrol-Butadien-Zweiblockcopolymer-Kautschuks mit α-Methylstyrol im Styrolblock

Es wurden 370 ml Toluol unter Rühren vorgelegt und 2 ml der Initiatorzusammensetzung In2 zugefügt. Anschließend erwärmte man auf 100°C und gab 100 ml Butadien zu. 2 Stunden nach der Butadienzugabe wurden bei 100°C 100 ml einer Mischung aus 50 Vol.-% α-Methylstyrol und 50 Vol.-% Styrol zugefügt. Man hielt bei 100°C und verfolgte gravimetrisch die Abnahme der Monomerkonzentration. 5 Stunden nach der Styrolzugabe wurde die Reaktion durch Zufügen von 1 ml Methanol abgebrochen. Der Umsatz betrug zu diesem Zeitpunkt 81 %.

Die erhaltene Reaktionsmischung wurde von Lösungsmitteln befreit und die Eigenschaften des erhaltenen Polymergranulats wurden bestimmt, beides wie vorstehend unter 2.1 beschrieben.

Das zahlenmittlere Molekulargewicht Mₙ betrug 120500 g/mol, und die Uneinheitlichkeit M_{w}/Mₙ war 2,5. Der α-Methylstyrol-Anteil im gesamten Blockcopolymeren betrug 18 %.

### 2.3 Beispiel 10: Herstellung eines schlagzähen Polystyrols (HIPS)

Als Kautschukkomponente des HIPS wurde ein lineares Styrol-Butadien-Styrol-Dreiblockcopolymer verwendet, dass (nicht erfindungsgemäß) unter Verwendung von allein s-BuLi als Initiator, wie folgt hergestellt wurde:

In einem 2 m³ fassenden Rührkessel wurden 391 kg Toluol vorgelegt und auf 45 °C temperiert. Es wurden 258 g der 12 gew-%igen Lösung von sec-Butyllithium in Cyclohexan zugefügt. Danach gab man nacheinander die folgenden Monomerportionen M1 bis M6 hinzu, wobei die nächste Portion erst hinzugefügt wurde, nachdem mittels Siedekühlung die zwischenzeitlich angestiegene Reaktorinnentemperatur wieder auf 45 bis 55 °C abgesunken war: M1, 11,6 kg Styrol; M2, 25 kg Butadien; M3, 19,5 kg Butadien; M4, 16,9 kg Butadien; M5, 13 kg Butadien; M6, 44,2 kg Styrol. Die vorstehende Styrolportion M6 wurde zugegeben, als die Reaktorinnentemperatur um 10 °C über der Temperatur vor der letzten Butadienzugabe M5 lag. Schließlich wurde die Reaktion durch Zugabe von 8,4 g Wasser abgebrochen. Die Reaktionsmischung hatte einen Feststoffgehalt von 25,2 Gew.-% und wurde durch Zugabe von 78 kg Styrol und 215 kg α-Methylstyrol auf 16 Gew.-% Feststoffgehalt verdünnt. Die Kautschuklösung enthielt demnach 16 Gew.-% Kautschuk, 39 Gew.-% Toluol, 12 Gew.-% Styrol und 33 Gew.-% α-Methylstyrol.

Das Blockcopolymere besaß gemäß GPG-Analyse eine monomodale Verteilung. Der gaschromatographisch ermittelte Restmonomergehalt des Blockcopolymeren betrug kleiner 10 ppm (by weight) Butadien.

Die Peak-Molekulargewichte M (Maximum der Molekulargewichtsverteilung) des erhaltenen Blockcopolymerkautschuks betrugen: erster Styrolblock 20 000, Butadienblock 160 000, zweiter Styrolblock 95 000, ermittelt per GPC wie vorstehend beschrieben. Der Butadiengehalt betrug 59,5 Gew.-%.

Die auf diese Weise erhaltene Kautschuklösung enthielt durch den abschließenden Verdünnungsschritt (siehe vorstehend) bereits α-Methylstyrol. Die Kautschuklösung wurde nach dem erfindungsgemäßen Verfahren mit einer Initiatorzusammensetzung aus KH und TIBA, zum HIPS polymerisiert wie folgt:

Die Polymerisation wurde kontinuierlich in einem doppelwandigen 50 I-Rührkessel mit einem Standard-Ankerrührer durchgeführt. Der Reaktor war für 25 bar Absolutdruck ausgelegt sowie mit einem Wärmeträgermedium und per Siedekühlung für isotherme Reaktionsführung temperiert.

In den Rührkessel wurden unter Rühren mit 115 Upm kontinuierlich 2,7 kg/h Styrol, 13,4 kg/h der Kautschuklösung, und 70 g/h der Initiatorzusammensetzung In2 eindosiert und bei einer konstanten Reaktorinnentemperatur von 110 bis 120°C gehalten. Am Ausgang des Rührkessels betrug der Umsatz 38 %. Die Reaktionsmischung wurde in einen gerührten 29 I-Turmreaktor gefördert, der mit zwei gleichgroßen Heizzonen (erste Zone 110°C, zweite Zone 160°C Innentemperatur) versehen war. Der Austrag des Turmreaktors wurde mit 787 g/h einer Additivlösung (siehe unten) versetzt, danach durch einen Mischer geführt und schließlich durch ein auf 250°C beheiztes Rohrstück geleitet. Danach wurde über ein Druckregelventil in einen bei 270°C betriebenen Teilverdampfer gefördert und in einen bei 5 mbar Absolutdruck und 280°C betriebenen Vakuumtopf entspannt. Die Polymerschmelze wurde mit einer Förderschnecke ausgetragen und granuliert. Der Umsatz war quantitativ.

Die Additivlösung bestand aus 2 Gew.-% Irganox® 1076, 15 Gew.-% Toluol, 9 Gew.-% 2-Ethylhexansäure, und 74 Gew.-% Weißöl.

Der per Gaschromatographie bestimmte Restmonomergehalt des HIPS betrug kleiner 5 ppm Styrol, kleiner 5 ppm Ethylbenzol und kleiner 100 ppm α-Methylstyrol, jeweils ppm by weight, ppm(w).

Am Polymergranulat wurde die Wärmeformbeständigkeit Victat B nach EN ISO 306 zu 128°C ermittelt.

Die Beispiele zeigen, dass sich mit dem erfindungsgemäßen Verfahren sowohl Homopolymere als auch Copolymere des α-Methylstyrols auf wirtschaftliche Weise herstellen lassen. Die Polymere zeichneten sich durch geringe Restmonomer- bzw. - oligomergehalte, sowie gute Wärmeformbeständigkeit aus.

## Patentansprüche

1. Verfahren zur Herstellung von Homopolymeren aus α-Methylstyrol, oder von Copolymeren aus α-Methylstyrol und Comonomeren, durch anionische Polymerisation in Gegenwart einer Initiatorzusammensetzung, **dadurch gekennzeichnet, dass** die Initiatorzusammensetzung Kaliumhydrid und mindestens ein Aluminiumorganyl enthält.

2. Verfahren nach Anspruch 1, **dadurch gekennzeichnet, dass** als Comonomere Styrol, Butadien, Isopren oder deren Mischungen, verwendet werden.

3. Verfahren nach den Ansprüchen 1 bis 2, **dadurch gekennzeichnet, dass** als Aluminiumorganyl Triisobutylaluminium (TIBA) verwendet wird.

4. Verfahren nach den Ansprüchen 1 bis 3, **dadurch gekennzeichnet, dass** in der Initiatorzusammensetzung das Molverhältnis von Aluminium zu Kalium 0,2:1 bis 10:1 beträgt.

5. Verfahren nach den Ansprüchen 1 bis 4, **dadurch gekennzeichnet, dass** die Initiatorzusammensetzung hergestellt wird, indem man Kaliumhydrid und das in einem inerten Kohlenwasserstoff gelöste oder suspendierte Aluminiumorganyl vermischt und die Mischung bei einer Temperatur von 0 bis 250°C mindestens 2 Minuten lang reifen lässt.

## Claims

1. A process for preparing homopolymers of α-methylstyrene, or copolymers of α-methylstyrene and comonomers, by anionic polymerization in the presence of an initiator composition, which comprises using an initiator composition in which potassium hydride and at least one organylaluminum compound are present.

2. The process according to claim 1, wherein the comonomers used comprise styrene, butadiene, isoprene, or a mixture of these.

3. The process according to claim 1 or 2, wherein the organylaluminum compound used comprises triisobutylaluminum (TIBA).

4. The process according to any of claims 1 to 3, wherein the molar ratio of aluminum to potassium in the initiator composition is from 0.2:1 to 10:1.

5. The process according to any of claims 1 to 4, wherein the initiator composition is prepared by mixing potassium hydride and the organylaluminum compound suspended or dissolved in an inert hydrocarbon, and permitting the mixture to age at a temperature of from 0 to 250°C for at least 2 minutes.

## Revendications

1. Procédé de fabrication d'homopolymères de α-méthylstyrène ou de copolymères de α-méthylstyrène et de comonomères par polymérisation anionique en présence d'une composition d'amorceurs, **caractérisé en ce que** la composition d'amorceurs contient de l'hydrure de potassium et au moins un organyle d'aluminium.

2. Procédé selon la revendication 1, **caractérisé en ce que** l'on utilise comme comonomère du styrène, du butadiène, de l'isoprène ou leurs mélanges.

3. Procédé selon les revendications 1 et 2, **caractérisé en ce que** l'on utilise comme organyle d'aluminium du triisobutylaluminium (TIBA).

4. Procédé selon les revendications 1 à 3, **caractérisé en ce que**, dans la composition d'amorceurs, le rapport molaire de l'aluminium au potassium est de 0,2:1 à 10:1.

5. Procédé selon les revendications 1 à 4, **caractérisé en ce que** la composition d'amorceurs est fabriquée en mélangeant de l'hydrure de potassium à un organyle d'aluminium dissous ou en suspension dans un hydrocarbure inerte et en laissant reposer le mélange à une température de 0 à 250°C pendant au moins 2 minutes.
